(19) Europäisches Patentamt

European Patent Office

Office européen des brevets

(11) **EP 1 624 634 A2**

(12) **EUROPEAN PATENT APPLICATION**

(43) Date of publication:
08.02.2006 Bulletin 2006/06

(51) Int Cl.:
*H04L 25/03* (2006.01)　　　*H04B 7/08* (2006.01)

(21) Application number: 05016995.2

(22) Date of filing: 04.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 04.08.2004 KR 2004061491

(71) Applicant: SAMSUNG ELECTRONICS CO., LTD.
Suwon-si,
Gyeonggi-do (KR)

(72) Inventors:
• **Kim, Hyoun-Kuk,**
c/o Samsung Electronics Co., Ltd.
Suwon-si,
Gyeonggi-do (KR)

• **Park, Hyun-Cheol,**
**Samsung Electronics Co., Ltd.**
Suwon-si,
Gyeonggi-do (KR)
• **Suh, Seung-Bum,**
c/o Samsung Electronics Co., Ltd.
Suwon-si,
Gyeonggi-do (KR)
• **Choi, Eoi-Young,**
c/o Samsung Electronics Co., Ltd.
Suwon-si,
Gyeonggi-do (KR)

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for receiving signals in MIMO system**

(57)　　A MIMO receiving apparatus includes a detection priority decision unit, which receives, via N antennas, signals transmitted from M transmitting antennas and determines the detection priorities of the signals; and a signal detector, which successively detects the signals in a decreasing order from a signal having a higher priority according to the detection priorities determined by the detection priority decision unit. System complexity can be reduced by minimizing the number of the inverse matrix calculations required for an SIC mechanism using one MIMO DFE and MISO DFEs corresponding to the number of transmitting antennas.

FIG.3

**Description**

The present invention relates generally to a wireless communication system, and in particular, to an improved receiver for a multicarrier-based MIMO (Multiple-Input Multiple-Output) system.

A MIMO system equips multiple antennas for both a transmitter and a receiver in order to raise spectrum efficiency. The MIMO system is undergoing great advances. For communication systems based on MIMO technology, a D-BLAST (Diagonal Bell Labs Layered Space-Time) scheme of diagonally transmitting a data stream via multiple transmitting antennas has been suggested. When the D-BLAST scheme is used, a space diversity gain and a transmission/reception diversity gain can be obtained. However, it is very difficult to physically construct a system that incorporates the D-BLAST scheme. A system obtained by simplifying the complexity of a D-BLAST system is a V-BLAST (Vertical-BLAST) system which can transmit parallel data streams. In the V-BLAST system, a space diversity gain and a reception diversity gain can be obtained.

In order to mitigate a frequency selective channel effect, a MIMO-DFE (MIMO Decision Feedback Equalizer) that takes into consideration an IIR (Infinite-length Impulse Response) and a FIR (Finite-length Impulse Response) in terms of an MMSE (Minimum Mean Square Error) has been suggested.

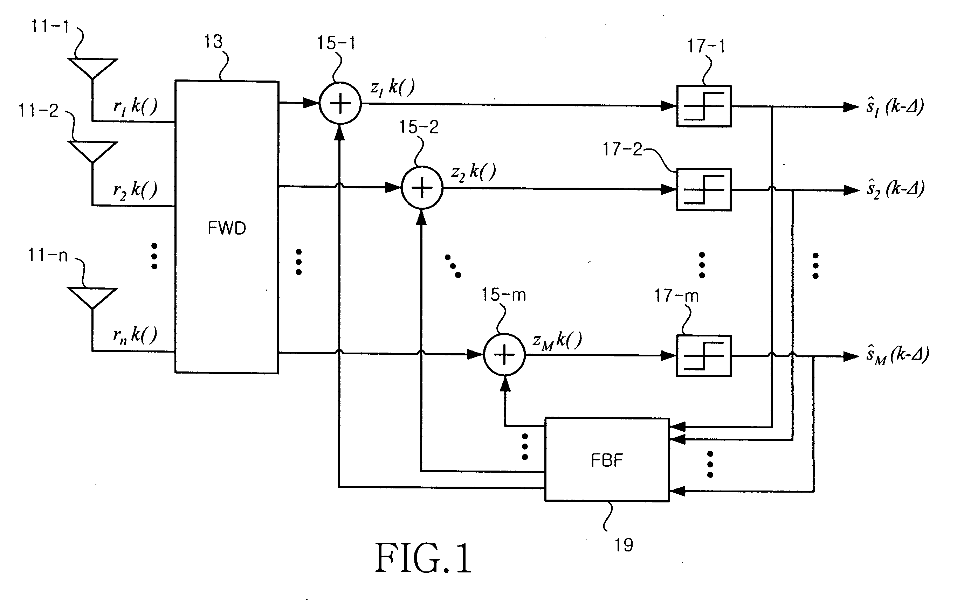

FIG. 1 is a block diagram of a conventional MIMO MMSE-DFE receiver. As shown in FIG. 1, in the MIMO MMSE-DFE receiver, signals received via receiving antennas 11-1 through 11-n are passed through a feedforward (FWD) filter 13, to which a tap value for an MSE (Minimum Square Error) is applied, and transmitted to their associated adders 15-1 through 15-m. Signals output from the adders 15-1 through 15-m are passed through their associated decision elements 17-1 through 17-m and recovered as transmission signals. Signals output from the decision elements 17-1 through 17-m are passed through a feedback filter (FBF) 19 operating under the same principle as the feedforward filter 13, and transmitted to the adders 15-1 through 15-m, in which they are added to the signals output from the feedforward filter 13. However, in the MIMO MMSE-DFE receiver, data streams having different error rates are fedback, causing a deterioration in the system performance.

In the receiving ends, an OSIC (Ordered Successive Interference Cancellation) scheme is used to improve the performance of a V-BLAST system. The OSIC scheme exhibits the best effect in an area where an SNR (Signal-to-Noise Ratio) is high. An OSIC-DFE selects a stream having the highest reliability from the receiving ends and cancels a CCI (Co-Channel Interference) using the OSIC scheme.

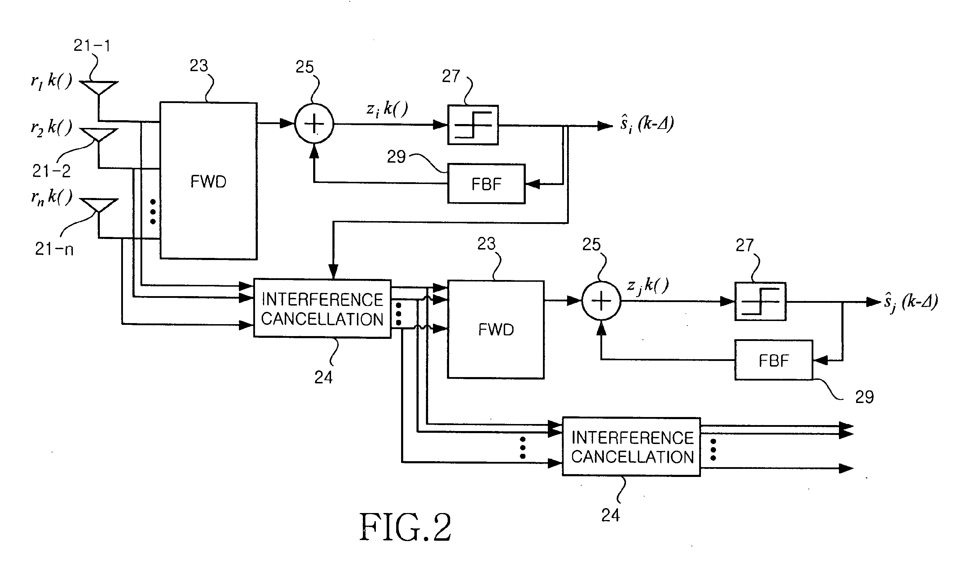

FIG. 2 is a block diagram illustrating signal detection structures of first two stages of a conventional OSIC-DFE receiver. As shown in FIG. 2, the OSIC-DFE receiver is composed of a plurality of MISO (Multiple-Input Single-Output)-DFE structures for successive signal detection. In the OSIC-DFE receiver, signals received via receiving antennas 21-1 through 21-n are processed by a feedforward filter 23. A signal output from the feedforward filter 23 is transmitted to an adder 25. A signal output from the adder 25 is passed through a decision element 27 and recovered as a transmission signal. A signal output from the decision element 27 is passed through a feedback filter 29, and transmitted to the adder 25, in which it is added to the signal output from the feedforward filter 23. The signal output from the decision element 27 is also transmitted to an interference cancellation module 24 and cancelled from the signals received via the antennas. Because the OSIC-DFE receiver successively detects a signal having fewer errors from the received signals, cancels the detected signal from the received signals, and then detects a next signal from the received signals, it exhibits good performance in terms of the SINR (Signal-to-Interference-and-Noise Ratio) and the MSE. However, the OSIC-DFE receiver is very complex, since inverse matrix calculations with respect to an input self-correlation matrix corresponding to the square of the number of transmitting antennas are required. For example, in the case of a 6x6 MIMO system, when first through sixth equalizing processes are performed, a total of 21 (6, 5, 4, 3, 2, and 1 in each equalizer) inverse matrix calculations are required.

Also, in the OSIC-DFE receiver, an increase in the BER (Bit Error Rate) of an initially detected data stream causes error propagation to the data streams detected by subsequent detecting units, deteriorating system performance.

The present invention is for substantially solving at least the above problems and/or disadvantages and to provide at least the advantages below. Accordingly, the object of the present invention is to provide a MIMO receiver having relatively low complexity that improves system performance.

This object is solved by the subject matter of the independent claims.

Preferred embodiments are defined by the subject matter of the dependent claims.

An aspect of the present invention is to apply to a MIMO receiver an SIC mechanism that can minimize the number of inverse matrix calculations for detecting signals received via multiple antennas.

A further aspect of the present invention is to provide a MIMO receiver that enables effective interference cancellation through reliability normalization.

A further aspect of the present invention is to provide a MIMO receiver that enables effective CCI cancellation by applying weighted CCI cancellation to an initial detector on the basis of reliability normalization of the data streams according to a log-likelihood ratio.

According to one aspect of the present invention, a MIMO receiving apparatus includes a detection priority decision unit, which receives signals transmitted from M transmitting antennas via N receiving antennas and determines the detection priorities of the signals, and a signal detector, which successively detects the signals from a signal having a higher priority according to the detection priorities determined by the detection priority decision unit.

It is preferred that the detection priority decision unit is a MIMO-DFE, which includes a feedforward filter having (N+ 1) taps corresponding to the respective receiving antennas and a feedback filter having N taps corresponding to the respective detected signals.

It is also preferred that the detection priority decision unit includes a MIMO-DFE, which detects the signals and outputs the detected signals, and an interference estimator, which outputs weighted signals obtained by multiplying the signals output from the MIMO-DFE by weights according to the transmitting antennas.

It is also preferred that the signal detector includes M signal detecting units, which are connected in series and detect the respective signals having different detection priorities.

It is further preferred that each of the M signal detecting units includes an interference cancellation module, which cancels an interference component of the signals input from the receiving antennas using the signals output from the interference estimator, and a signal detection module, which detects a signal having the highest detection priority from among the interference cancelled signals.

It is preferred that the weights are calculated using the SINRs of the transmitting antennas.

It is preferred that the interference estimator includes multipliers, which multiply the parallel signals output from the MIMO-DFE by the weights, and a symbol interference estimation module, which estimates the ISI (Inter-Symbol Interference) of the signal having the highest detection priority.

It is preferred that the interference estimator includes multipliers, which multiply parallel signals output from the MIMO-DFE by the weights, and a symbol interference estimation module, which estimates ISI of each of the signals having different detection priorities.

It is preferred that the signal detection module is a MISO-DFE.

It is preferred that the MISO-DFE includes a feedforward filter having (N+1) taps corresponding to the respective receiving antennas and a feedback filter having N taps corresponding to the respective detected signals.

According to another aspect of the present invention, a signal receiving method in a MIMO system including M transmitting antennas and N receiving antennas, includes the steps of determining the detection priorities of the signals received via the receiving antennas at a predetermined time; and successively detecting the signals from a signal having a higher priority according to the determined detection priorities.

It is preferred that the determining of the detection priorities includes the steps of pre-detecting the signals; and outputting weighted signals obtained by multiplying the pre-detected signals by weights according to the transmitting antennas.

It is preferred that, in the successive detection of the signals, signal detection is successively performed M number of times from a signal having a higher priority.

It is preferred that the detection of the signal in each time includes the steps of canceling an interference component from the signals input from the receiving antennas using the weighted signals; and detecting a signal having the highest detection priority from among the signals remaining by excluding a signal detected in a previous time period from the interference cancelled signals.

It is preferred that the interference component includes a CCI (Co-Channel Interference) and an ISI.

It is preferred that the detection of the signal in each time period includes the steps of removing signals remaining by excluding a signal having the highest detection priority from the signals remaining by excluding a signal detected in a previous time period from the signals input from the receiving antennas; and canceling the ISI of the signal having the highest detection priority.

It is preferred that the weights are calculated using the SINRs of the transmitting antennas.

The above object and other aspects, features and advantages of the present invention will become more apparent from the following detailed description when taken in conjunction with the accompanying drawings in which:

> FIG 1 is a block diagram of a conventional MIMO MMSE-DFE receiver;
> FIG. 2 is a block diagram illustrating the signal detection structures of the first two stages of a conventional OSIC-DFE receiver;
> FIG. 3 is a block diagram of a MIMO receiving apparatus according to a preferred embodiment of the present invention;
> FIG. 4 is a detailed block diagram illustrating an internal configuration of an interference extractor; and
> FIGs. 5 and 6 are graphs illustrating the performance simulation experiment results of a MIMO receiver according to the preferred embodiment of the present invention.

A preferred embodiment of the present invention will be described herein below with reference to the accompanying drawings. In the following description, well-known functions or constructions are not described in detail since they would obscure the invention in unnecessary detail.

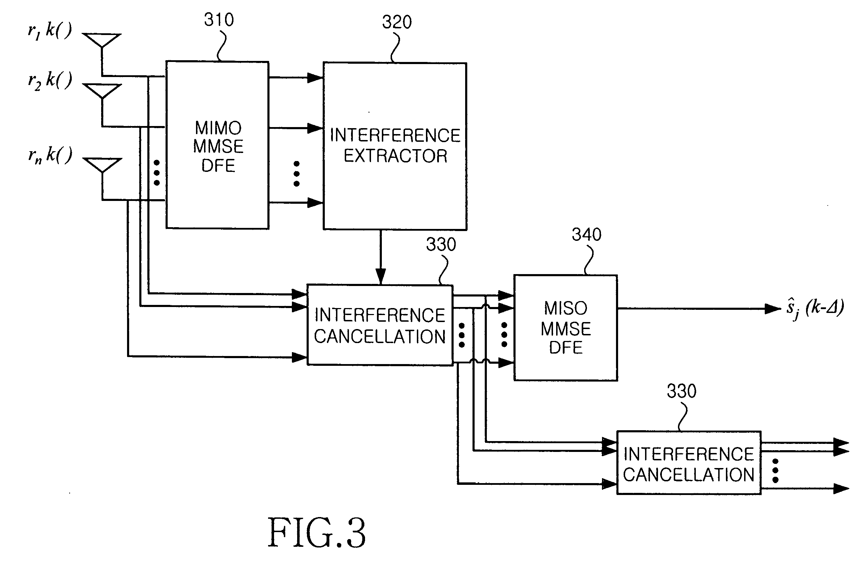

FIG. 3 is a block diagram of a MIMO receiving apparatus according to a preferred embodiment of the present invention.

As shown in FIG. 3, the MIMO receiving apparatus includes a MIMO MMSE-DFE 310, which detects the data streams transmitted from the m transmitting antennas by receiving signals via the n receiving antennas and determines the processing priorities of the detected data streams, an interference extractor 320, which calculates the reliability coefficients of the data streams by detecting the SINRs of the detected data streams and outputs the signals obtained by multiplying the calculated reliability coefficients by the corresponding data streams, MISO MMSE-DFEs 340 , the number of which is equal to the number of transmitting antennas, m interference cancellation modules 330, which cancel the interference from the data streams input via the receiving antennas in respective detecting units using the signals output from the interference extractor 320 and output the interference-cancelled signals to the MISO MMSE-DFEs 340, respectively.

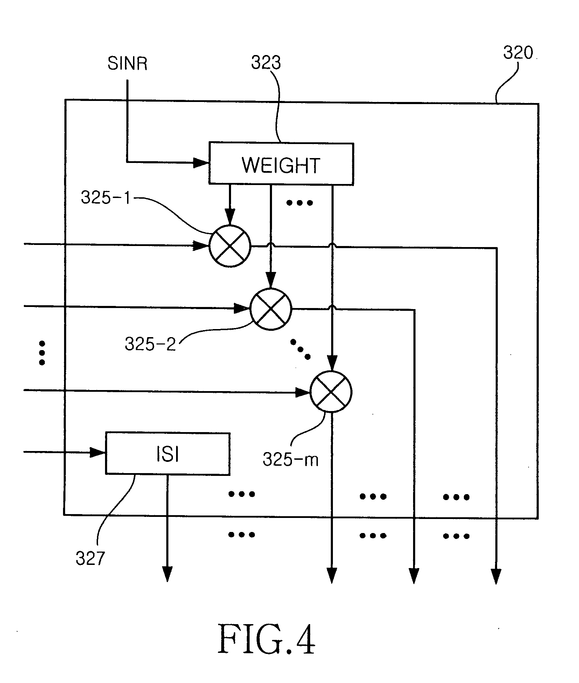

FIG. 4 is a detailed block diagram illustrating an internal configuration of the interference extractor 320. Referring to FIG. 4, the interference extractor 320 includes a weight generator 323, which detects the SINRs according to the transmitting antennas and generates the reliability coefficients of the transmitting antennas using the detected SINRs, a plurality of multipliers 325-1 through 325-m, which output signals obtained by multiplying the generated reliability coefficients by the signals transmitted from the corresponding transmitting antennas, and an ISI module 327, which generates information for canceling the ISI of a data stream having the highest reliability coefficient.

A first MISO MMSE-DFE of the MISO MMSE-DFEs 340 receives the data streams, interference of which has been cancelled by a first interference cancellation module 330, and detects a data stream having the highest detection priority. A second MISO MMSE-DFE 340 detects a data stream having the highest detection priority from among the data streams remaining by excluding the data stream detected by the first MISO MMSE-DFE 340 from data streams output from a second interference cancellation module (not shown). The same process is repeatedly performed until the last MISO MMSE-DFE 340.

In a case where received signals are detected as described above, an inverse matrix calculation of an input self-correlation matrix to detect all of the data streams is required to determine the detection priorities of the data streams in the MIMO MMSE-DFE 310. One inverse matrix calculation is required to detect a data stream having the highest priority in every stage of the MISO MMSE-DFEs 340. Accordingly, the total number of inverse matrix calculations is 1+m. This indicates that the present embodiment has a relatively very low complexity as compared with a conventional OSIC-DFE receiver requiring m(m+1)/2 inverse matrix calculations.

An operation of a MIMO receiver configured as described above will now be described in detail. In a MIMO system that includes M transmitting antennas and N receiving antennas, a MIMO MMSE-DFE is deployed to decrease the complexity of the detection order in a first stage of the MIMO receiver according to the embodiment of the present invention, and M MISO MMSE-DFEs are deployed in a next stage.

The MIMO MMSE-DFE includes feedforward filters for respective receiving antennas, each feedforward filter having (Nf+1) taps and feedback filters each having Nb taps corresponding to the detected data streams. Here, Nf is the number of receiving antennas and Nb is the number of data stream. Each of the MISO MMSE-DFEs includes a feedforward filter having (Nf+1) taps corresponding to the receiving antennas and a feedback filter having Nb taps. A value input to a decision element to detect a data stream n is obtained from Equation 1.

$$z_n(k) = \begin{bmatrix} \mathbf{w}_n \\ \mathbf{b}_n \end{bmatrix}^H \begin{bmatrix} \mathbf{r}(k) \\ \hat{\mathbf{s}}(k) \end{bmatrix}$$
$$= \mathbf{c}_n^H \mathbf{u}(k)$$

$$\ldots\ldots\ldots(1)$$

Here, $c_n$ is a filter weight vector of $(N(N_f + 1) + MN_b) \times 1$ and $u_k$ denotes input vectors of the feedforward filter and the feedback filter of $(N(N_f + 1) + MN_b) \times 1$.

The filter weight vector for detecting the data stream n is obtained by Equation 2, and an MMSE is obtained by Equation 3.

$$\mathbf{c}_{n,opt} = \mathbf{R}^{-1}\mathbf{p}_n \qquad \ldots\ldots\ldots(2)$$

$$J_{mmse}^{(n)} = \sigma_n^2 - \mathbf{p}_n^H \mathbf{R}^{-1}\mathbf{p}_n \qquad \ldots\ldots\ldots(3)$$

Here, $\sigma_n^2$ is the energy of the data stream n, R = $E[u(k)_u{}^H(k)]$ and is an input self-correlation matrix, and $p_n = E[s_n^*(k-\Delta)u(k)]$ and is a cross correlation vector between a delayed data stream n and a filter input vector.

When the filter weight vector obtained by Equation 2 is applied to each filter tap, the data stream n can be detected using the MMSE. While a conventional OSIC-DFE scheme requires a number of inverse matrix calculations corresponding to a number of non-detected data streams in order to calculate the filter weight vector, a MIMO MMSE-DFE scheme requires only one inverse matrix calculation of a self-correlation matrix. Accordingly, system complexity can be dramatically reduced in the MIMO MMSE-DFE scheme. Also, while a detection order calculation for determining a detection order is performed in every detection stage in the conventional OSIC-DFE scheme, the detection order calculation is performed in only a first detection stage in the embodiment of the present invention. Unlike an OSIC-DFE structure requiring M(M+1)/2 inverse matrix calculations, since the suggested receiver requires only (M+1) inverse matrix calculations, the receiver complexity can be reduced by linearly changing the number of inverse matrix calculations according to the number of transmitting antennas. In the receiver of the present embodiment of the present invention, the overall performance of the receiver is improved by canceling the ISI and the CCI through a reliability normalization of each data stream and redetecting a data stream having a first detection priority. Any remaining interference and noise components of a decision element input signal can be represented with a white Gausian channel model as shown in Equation 4. BPSK (Binary Phase Shift Keying) is assumed for simplification.

$$z_n(k) = \mu_n(k)s_n(k) + v_n(k) \qquad \ldots\ldots\ldots(4)$$

A mean value and a variance value of $z_n(k)$ with respect to a transmitted data stream $s_n(k)$ can be obtained by Equation 5 and Equation 6, respectively.

$$\mu_n(k) = \mathbf{c}_{n,opt}^H \mathbf{p}_n \qquad \ldots\ldots\ldots(5)$$

$$\eta_n^2(k) = \mu_n(k) - \mu_n^2(k) \qquad \ldots\ldots\ldots(6)$$

According to Equations 5 and 6, since the mean and the variance values of a decision element input value are constant regardless of time, a time index k can be removed from Equations 5 and 6. An SINR of the data stream n is obtained by Equation 7.

$$SINR_n = \frac{E^2\{z_n(k)\}}{E\{|z_n(k) - \mu_n(k)|^2\}}$$
$$= \frac{\mu_n}{1-\mu_n} \qquad \dots\dots\dots(7)$$

An LLR (log-likelihood ratio) of the data stream n at time k is obtained by Equation 8.

$$\Lambda_n(k) = \ln \frac{\Pr(s_n(k) = +1|z_n(k))}{\Pr(s_n(k) = -1|z_n(k))}$$
$$= 2\,\mathrm{Re}\{z_n(k)\}(SINR_n + 1) \qquad \dots\dots\dots(8)$$

The LLR reliability of each bit of the data stream n is proportional to a magnitude of an absolute value of the LLR. In a high SINR area, the absolute value of the LLR is approximated by Equation 9.

$$|\Lambda_n(k)| \approx 2|\mathrm{Re}\{z_n(k)\}|SINR_n \qquad \dots\dots\dots(9)$$

In Equation 9, the reliability of each bit of the data stream n is obtained by calculating an absolute value of a real part of the decision element input value and the SINR, which is a reliability element of the data stream n. Therefore, the reliability of the data stream n can be defined as Equation 10.

$$|\Lambda_n| \approx 2SINR_n \qquad \dots\dots\dots(10)$$

The receiver according to the embodiment of the present invention uses a method of canceling the CCI by normalizing the reliability of the other data streams with respect to a data stream having the highest reliability (data stream having an MMSE value) from among all of the data streams in a second stage. Since the reliability of each data stream exists in a log domain, the reliability must be transformed into a linear domain. A reliability weight coefficient of the data stream n with respect to a data stream m having the highest reliability in first output signals can be represented as Equation 11.

$$\gamma_{nm} = e^{|\Lambda_n| - |\Lambda_m|} \qquad \dots\dots\dots(11)$$

After normalizing the reliability of a data stream having the highest reliability in the first stage on the basis of Equation 11, the ICI and the CCI of the signals received from all of the receiving antennas are cancelled in the second stage as shown in Equation 12.

$$r_i(k) \leftarrow r_i(k) - \sum_{\substack{m=0 \\ m \neq n}}^{M} \sum_{l=0}^{L_S} \gamma_{nm} h_{im}(l) \hat{s}_m(k-l) - \sum_{l=0}^{L_S} h_{in}(l) \hat{s}_n(k-l) \qquad \dots.(12)$$

The stages after the second stage are composed of the MISO MMSE-DFEs for detecting the remaining data streams in the order detected in the first stage.

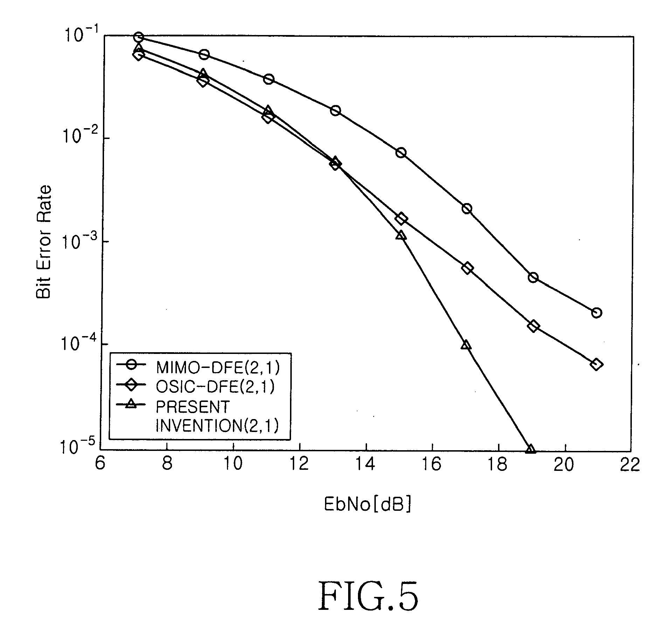

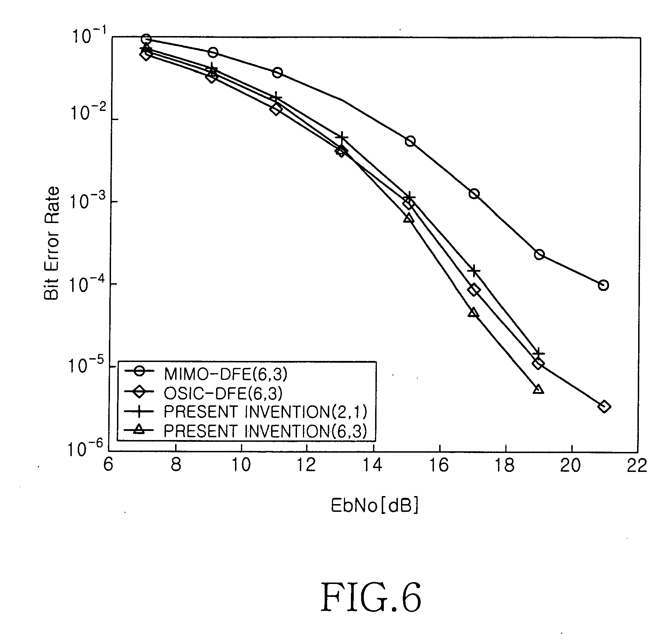

FIGs. 5 and 6 are graphs illustrating the performance of simulated experimental results of the MIMO receiver according to the preferred embodiment of the present invention.

The experiment is performed in a channel environment, in which an RMS delay dispersion is 0.5 in a symbol zone and a BER (Bit Error Rate) is reduced according to an exponential function of 6 channel taps, of systems, each including 4 transmitting antennas and 4 receiving antennas.

In FIG. 5, when the filters having a (2, 1) tap with respect to the BER of $10^{-4}$ are applied, the receiver according to the embodiment of the present invention exhibits a performance improvement of 2.5 dB as compared with a conventional OSIC-DFE receiver. In FIG. 6, when the number of taps of the filters increases, a performance difference is closer to 0.5 dB. However, since the performance difference according to the number of taps of the filters is small, an excellent performance can be exhibited with a few taps. Also, the performance of the receiver according to the embodiment of the present invention that includes a filter having a (2, 1) tap is similar to the performance of a conventional OSIC-DFE receiver having a (6, 3) tap.

As described above, in the inventive MIMO receiver, the complexity for determining the signal detection priorities is linearly proportional to the number of transmitting antennas. Thus, system complexity can be reduced.

Also, the system complexity can be reduced by minimizing the number of inverse matrix calculations required for an SIC mechanism using one MIMO DFE and a number of MISO DFEs corresponding to the number of transmitting antennas.

Furthermore, the CCI can be effectively cancelled by normalizing the reliability of the data streams according to an LLR in a first detection stage.

While the invention has been shown and described with reference to a certain preferred embodiment thereof, it will be understood by those skilled in the art that various changes in form and details may be made therein without departing from the scope of the invention as defined by the appended claims.

## Claims

1. A MIMO, Multiple-Input Multiple-Output, receiving apparatus comprising:

   a detection priority decision unit for receiving via N receiving antennas signals transmitted from M transmitting antennas and determining detection priorities of the signals; and
   a signal detector for successively detecting the signals in a decreasing priority order according to the detection priorities determined by the detection priority decision unit.

2. The MIMO receiving apparatus of claim 1, wherein the detection priority decision unit is a MIMO-DFE, MIMO Decision Feedback Equalizer.

3. The MIMO receiving apparatus of claim 2, wherein the MIMO-DFE comprises:

   a feedforward filter having N+1 taps corresponding to respective receiving antennas; and
   a feedback filter having N taps corresponding to respective detected signals.

4. The MIMO receiving apparatus of one of claims 1 to 3, wherein the detection priority decision unit comprises:

   a MIMO-DFE for detecting the signals and outputting the detected signals; and
   an interference estimator for outputting weighted signals obtained by multiplying the signals output from the MIMO-DFE by weights based on the transmitting antennas.

5. The MIMO receiving apparatus of one of claims 1 to 4, wherein the signal detector comprises M signal detecting units, which are connected in series and detect respective signals having different detection priorities.

**6.** The MIMO receiving apparatus of claim 4, wherein the signal detector comprises M signal detecting units, which are connected in series and detect respective signals having different detection priorities.

**7.** The MIMO receiving apparatus of claim 6, wherein each of the M signal detecting units comprises:

an interference cancellation module for canceling an interference component of the signals input from the receiving antennas using the signals output from the interference estimator; and
a signal detection module for detecting a signal having the highest detection priority from among the interference cancelled signals.

**8.** The MIMO receiving apparatus of claim 4, wherein the weights are calculated using SINRs of the transmitting antennas.

**9.** The MIMO receiving apparatus of claim 4, wherein the interference estimator comprises:

a plurality of multipliers for multiplying parallel signals output from the MIMO-DFE by the weights; and
a symbol interference estimation module for estimating an ISI, Inter-Symbol Interference, of the signal having the highest detection priority.

**10.** The MIMO receiving apparatus of claim 4, wherein the interference estimator comprises:

a plurality of multipliers for multiplying parallel signals output from the MIMO-DFE by the weights; and
a symbol interference estimation module for estimating an ISI of each of the signals having different detection priorities.

**11.** The MIMO receiving apparatus of claim 7, wherein the signal detection module is a MISO-DFE.

**12.** The MIMO receiving apparatus of claim 11, wherein the MISO-DFE comprises:

a feedforward filter having N+1 taps corresponding to respective receiving antennas; and
a feedback filter having N taps corresponding to respective detected signals.

**13.** A signal receiving method in a MIMO system including M transmitting antennas and N receiving antennas, comprising the steps of:

(1) determining detection priorities of signals received via the receiving antennas at a predetermined point in time; and
(2) successively detecting the signals in a decreasing priority order according to the determined detection priorities.

**14.** The signal receiving method of claim 13, wherein step (1) comprises steps of:

pre-detecting the signals; and
outputting weighted signals obtained by multiplying the pre-detected signals by weights based on the transmitting antennas.

**15.** The signal receiving method of claim 13 or 14, wherein, in step (2), the signal detection is successively performed M number of times in a decreasing order from a signal having a higher priority.

**16.** The signal receiving method of claim 14, wherein, in step (2), the signal detection is successively performed M number of times in a decreasing order from a signal having a higher priority.

**17.** The signal receiving method of claim 16, wherein the detection of the signal at each point in time comprises steps of:

canceling an interference component of the signals input from the receiving antennas using the weighted signals; and
detecting a signal having the highest detection priority from among signals remaining after excluding a signal detected in a previous point in time from the interference cancelled signals.

18. The signal receiving method of claim 17, wherein the interference component includes a CCI, Co-Channel Interference, and an ISI.

19. The signal receiving method of claim 16, wherein the detection of the signal during each point in time comprises steps of:

removing signals remaining by excluding a signal having the highest detection priority from signals remaining after excluding a signal detected in a previous time from the signals input from the receiving antennas; and canceling an ISI of the signal having the highest detection priority.

20. The signal receiving method of claim 14, wherein the weights are calculated using SINRs of the transmitting antennas.

FIG.1

EP 1 624 634 A2

FIG.2

EP 1 624 634 A2

FIG.3

FIG.4

FIG.5

FIG.6